# EUROPEAN PATENT APPLICATION

(11) **EP 4 653 764 A1**
(43) Date of publication of application: **26.11.2025**
(21) Application number: 24020164.0
(22) Date of filing: 23.05.2024
(51) Int. Cl.: F23D 14/22, F23D 14/32, F23D 14/58, F23D 14/70

(54) **VARIABLE FLAME BURNER**

(71) Applicant: Linde GmbH, 82049 Pullach (DE)
(72) Inventor: Eichler, Rüdiger, 82049 Pullach (DE); Muren, David, 82049 Pullach (DE); Ekman, Tomas, 82049 Pullach (DE)
(74) Representative: Gellner, Bernd

(57) **Abstract**

The invention relates to a burner with a burner head comprising at least one fuel lance and at least one oxidant outlet. The fuel lance is closed at its downstream end and comprises at least one radial opening. A deflector is provided, and the radial opening and the deflector are movably arranged relative to each other.

## Description

The present invention relates to a burner with a burner head comprising at least one fuel lance and at least one oxidant outlet and with at least one fuel supply line for a fuel gas and at least one oxidant supply line for a gaseous oxidant wherein the fuel supply line is connected to the upstream end of the fuel lance, and wherein the longitudinal extension of the fuel lance defines the main firing direction of the burner.

### Background

Heating furnaces with roof mounted burners are well known. If the flames from such burners are directed vertically down, the material to be heated in the furnace could be damaged by the hot flame. Therefore, in air/fuel firing roof mounted burners are so called disc-flame burner with high swirl of the air so that the flame does not go straight out of the burner towards the material below them, but instead creates a disc shaped flame which distributes the heat more along the furnace roof. However, such a solution is not possible with oxyfuel burners.

The furnace could be a continuous furnace or a batch furnace. For example, ingots are placed into a bogie heath furnace and heated up by roof mounted burners. In the beginning such an ingot, when cold, could benefit from a direct flame impingement from the roof mounted burners. However, after some time the burner would melt the surface of the ingot. From that time until the end of the heating cycle the flame must not get in contact with the surface of the ingot material. Thus, the heating power of the roof mounted burners has to be reduced to avoid any damages to the ingot surface.

Another objective of the present invention to provide a burner for a furnace which allows to heat up material very fast in a first phase but to reduce the direct heat impact in a second phase.

It is an object of the present invention to make it possible to place an oxyfuel burner in the furnace roof above the material to be heated.

Another object of the invention is to provide a burner capable to either focus the heat impact on a smaller area or to distribute the heat to a larger area.

One or more of these objectives are achieved by a burner with a burner head comprising at least one fuel lance and at least one oxidant outlet and with at least one fuel supply line for a fuel gas and at least one oxidant supply line for a gaseous oxidant wherein the fuel supply line is connected to the upstream end of the fuel lance, and wherein the longitudinal extension of the fuel lance defines the main firing direction of the burner, and which is characterized in that the fuel lance is closed at its downstream end such that no fuel can leave the fuel lance in the main firing direction, that the fuel lance comprises at least one radial opening, that a deflector is provided, and that the radial opening and the deflector are movably arranged relative to each other.

A fuel lance is connected to a fuel supply, for example a gaseous or liquid fuel supply, so that the fuel can be supplied to the fuel lance. The fuel lance is a longitudinal pipe, a tube or a conduit through which the fuel can be passed. The fuel lance has an upstream end and a downstream end. The upstream end is connected to the fuel supply. In regular use of the fuel lance the fuel flows in the direction from the upstream end to the downstream end.

The longitudinal extension of the fuel lance from its upstream end to its downstream end shall define the main firing direction of the burner.

In the axial direction the downstream end of the fuel lance is closed. Fuel flowing through the fuel lance cannot leave the fuel lance in the axial direction. But the fuel lance comprises at least one radial opening. The radial opening is provided at an angle between 25° and 90° to the longitudinal extension or to the longitudinal axis of the fuel lance. For example, in a fuel lance with the form of a right circular cylinder, i. e. a tube with a circular cross section, the radial opening is provided in the curved mantle surface of the cylinder. The at least one radial opening is preferably located close to the downstream end of the fuel lance. The term "close to the downstream end" shall mean that the distance between the radial opening and the downstream end is less than 50 mm, less than 40 mm, less than 30 mm or less than 20 mm or less than 5 diameters of the fuel lance, less than 3 diameters of the fuel lance or less than 2 diameters of the fuel lance.

A deflector is provided. The radial opening and the deflector are movably arranged relative to each other. In an "open position" the deflector and the radial opening of the fuel lance are positioned relative to each other in a way that fuel leaving the fuel lance through the radial opening does not impinge at the deflector. The flow direction of the fuel is not changed by the deflector. In its "closed position" the deflector is located in such a way that fuel gas leaving the fuel lance through the radial opening impinges at the deflector and is caused to change its flow direction.

The inventive burner allows to control the direction of the fuel flowing out of the burner head and thereby to control the direction of the burner flame or the burner combustion zone. When the deflector is in the "open position" and arranged such that the fuel does not impinge the deflector the fuel will flow in a direction essentially different from the main firing direction. The fuel will be combusted with the oxidant flowing out of the oxidant outlet(s). The resulting flame is broad and not focused in the main firing direction. In this mode it is also possible that there is a flameless combustion of fuel and oxidant. In the following this mode of operation will be called "side mode" since the fuel flow is directed to the sides of the burner.

When the deflector is in the "closed position" the fuel leaving the fuel lance through the radial opening impinges at the deflector and its flow direction is changed. Preferably, in the "closed position" form, size and position of the deflector are chosen so that the fuel flow is essentially deflected into the main firing direction of the burner. When the deflector is in the "closed position" the angle between the fuel flow and the axial direction of the fuel lance is preferably less than 45°, less than 30°, less than 20° or less than 10°. The fuel will be combusted with the oxidant flowing out of the oxidant outlet(s) and a flame is generated which is essentially directed in the main firing direction. In the following this operation mode will be called "straight mode". In the straight mode the flame or the combustion volume is longer and more intense compared to the flame or combustion volume generated in the side mode. In this mode it is also possible that there is a flameless combustion of fuel and oxidant.

The term "flame" shall mean the combustion volume where the fuel and the oxidant chemically react with each other. The flame could be visible or invisible. The combustion of fuel and oxidant without a visible flame is also called a flameless combustion.

According to one embodiment, the inventive burner comprises a burner head with at least one first oxidant outlet and at least one second oxidant outlet. The first and the second oxidant outlet can be connected to an oxidant supply. Thereby, oxidant can be supplied to the first oxidant outlet and / or to the second oxidant outlet.

In one embodiment of the invention the first oxidant outlet(s) is used for side mode operation of the burner, the second oxidant outlet(s) is used for straight mode operation of the burner.

As an example, the inventive burner can be placed in the roof of a furnace which is used to heat up metal material. In the beginning, when the metal material is still relative cold the burner is operated in the straight mode. The fuel provided to the burner flows out through the radial opening, impinges at the deflector and is deflected into the main firing direction which in the case of the mentioned roof mounted burner can be vertically downwards. The oxidant flows out of the second oxidant outlets and the fuel is combusted with the oxidant. The resulting flame (visible or invisible) is relative small and focused in the main firing direction. Thereby, most of the burner energy is directly transferred to the metal material which is located below the roof mounted burner. After some time the metal material has been heated up and there is the risk that the surface of the material is over heated and damaged by the burner flame. Then the deflector will be moved relative to the radial opening or the fuel lance with the radial opening will be moved relative to the deflector. In any case deflector and fuel lance are moved relative to each other so that the fuel does no more impinge on the deflector. Thereby, the burner is switched to side mode operation. The flow direction of the fuel is no more affected by the deflector and the fuel is distributed over a larger area in a direction perpendicular to the main firing direction. The fuel reacts and combusts with the oxidant flowing out of the first oxidant outlets producing a broad flame which is not focused on the material located below the roof mounted burner but more uniformly distributed in the furnace volume. This broad flame is typically invisible.

By switching between the "open position" and the "closed position" it is possible to modulate between the side mode operation with a broader combustion volume and the straight mode operation with a smaller, more focused flame. On the one hand, this allows to enhance the temperature homogeneity in the furnace if necessary or desired and, on the other hand, it allows to effectively heat up the material in the furnace.

According to another example, the inventive burner can be placed in or on a side of a furnace where there is material in front of it at a distance depending on the angle with which the fuel and oxygen are ejected. For example, such furnace could be a box or bogie hearth furnace with burners on the sides and which is loaded with large ingots.

According to a preferred embodiment of the invention there are two or more first oxidant outlets and / or two or more second oxidant outlets. The first and / or second oxidant outlets may be evenly distributed across the burner head so that a uniform oxidant flow is achieved.

The second oxidant outlets may be provided closer to the radial openings of the fuel lance than the first oxidant outlets. In the straight mode of the burner when the deflector is in the closed position and when the fuel is essentially directed in the main firing direction, it is preferred to provide the oxidant through the second oxidant outlets. When the second oxidant outlets are close to the radial openings the oxidant stream will be close to the fuel stream and the reaction of fuel and oxidant will be enhanced resulting in a more intense flame. On the other hand, if in the side mode the oxidant is supplied via the first oxidant outlets, the distance between fuel stream and oxidant stream is increased and the combustion reaction is slowed down resulting in a more uniform and broad combustion zone.

Preferably, both modes, the straight mode and the side mode, are flameless modes with no visible flame. In the straight mode the one fuel jet is directed in the direction of the axis of the fuel lance. In one embodiment, two straight oxygen jets provided through the second oxidant outlets on each side of the fuel jet supply oxygen to the combustion. The fuel jet and the two oxygen jets flow essentially parallel to each other.

In the "side" mode, the fuel is free to flow in the direction of the holes in the fuel lance without any deflection. According to a preferred embodiment, the first oxidant outlets are arranged such that they are in the same direction as the openings in the fuel lance. This will effectively split the flameless flame in two flameless flames and angle both new flames away from the center. For example, the oxidant can be supplied via two oxidant lances which are closed at their downstream end but provided with radial first oxidant outlets similar to the design of the fuel lance.

According to another embodiment, the fuel lance has four radial openings and four oxidant lances are provided. Each of the radial openings is provided with a deflector to direct the fuel leaving the fuel lance through the openings either in the main firing direction (straight mode) or perpendicular thereto (side mode). Each of the oxidant lances is closed at its downstream end and has one radial oxidant outlet. In side mode operation the oxidant flows through the oxidant outlet in a direction perpendicular to the axis of the fuel lance and to the axis of the oxidant lance. For realization of the straight mode operation each oxidant lance is provided with a deflector, too. The deflectors deflect the oxidant exiting the oxidant lance into the main firing direction so that the four oxidant jets and the four fuel jets are essentially parallel to each other. It is obvious that this embodiment with four radial openings in the fuel lance and four oxidant lances can easily be changed to a system with three, five, six or more radial openings and a corresponding number of oxidant lances.

In another embodiment the first oxidant outlet is designed so that the oxidant leaves the first oxidant outlet at an angle of more than 10°, more than 20° or more than 30° relative to the main firing direction. If two or more first oxidant outlets are provided it is preferred that the single oxidant flows flowing out of the first oxidant outlets are divergent relative to each other so that the oxidant is distributed over a large area and a broad flame is produced when the fuel is combusted with the oxidant.

In another embodiment the second oxidant outlet is designed so that the oxidant leaves the second oxidant outlet at an angle of less than 20° or less than 10° relative to the main firing direction. The second oxidant outlets are preferably in use when the deflector is in the "closed position" and the burner is operated in straight mode. In that mode a small and convergent flame shall be achieved. Therefore, it is preferred to provide the oxidant provided through the second oxidant outlets to a small area, i. e. to focus the oxidant flows to the main firing direction.

In another embodiment the first oxidant outlets and the cross section of the fuel lance are arranged in an essentially straight first line and the second oxidant outlets and the cross section of the fuel lance are arranged in an essentially straight second line and the first line and the second line are perpendicular to each other. For example, in the front view of the burner head the fuel lance may be provided in the center of the burner head. Two first oxidant outlets may be provided, one above the central downstream end of the fuel lance at the "12 o'clock" position and one below the central downstream end of the fuel lance at the "6 o'clock" position. The two first oxidant outlets and the downstream end of the fuel lance form a straight first line in the "6 o'clock" to "12 o'clock" direction. In this example, the two second oxidant outlets would be arranged at the "3 o'clock" and "9 o'clock" position.

In another embodiment the oxidant supply line is connected to an oxidant source which provides an oxidant with at least 80% by volume oxygen. The burner is preferably operated as an oxy-fuel burner with a high oxygen content of at least 80 % by volume. Preferably, the oxidant source is an oxygen cylinder, an oxygen cylinder bundle, an oxygen tank or an onsite unit for oxygen production, for example a PSA or a hydrolizer for the production of hydrogen and oxygen.

In another embodiment the deflector is designed as a sleeve or as a tube. The term sleeve shall in particular mean a jacket, an envelope, or casing which allows to insert the fuel lance into it. The sleeve or tube has an inner diameter which is larger than the outer diameter of the fuel lance so that it covers at least a portion of the fuel lance and that the fuel lance and the sleeve or tube can be moved relative to each other.

In another embodiment the fuel lance is provided in a bore through the burner head and the burner head itself has the function of the deflector. When the radial opening of the fuel lance is within the bore the fuel flowing out of the radial opening will impinge on the inner walls of the bore and be deflected so that it flows through the annular gap between the fuel lance and the burner head in the main firing direction.

When the fuel lance is moved in the main firing direction so that the radial opening is outside the bore, the fuel will not be deflected.

In a preferred embodiment, the deflector has a special form or design so that the fuel stream is deflected into the main firing direction.

The inventive burner may be used in a furnace for heating metals, in particular for heating and / or melting steel, aluminium, copper, or in heating vessels.

The burner may be provided in the roof of the furnace as described above and / or in one of the side walls of the furnace. Depending on the size of the furnace and on the material to be heated, one or more burners according to the invention may be provided. In that case all burners may be provided as roof mounted burners or as side mounted burners or some burners are mounted in the furnace roof whereas some other burners are mounted in one or more of the side walls.

A preferred version of the inventive burner has a fuel lance with two radial openings and first oxidant outlets arranged in such a way that in the side mode operation two flames are produced directed to opposite sides of the fuel lance. If more than one of such burners are used, it is preferred to rotate burners next to each other in order to have the flames of neighboring burners in different directions rather than to create hot-spots by hitting each other. Preferably, in the side mode operation the flames of neighbouring burners are angled 90° to each other.

The invention as well as additional preferred details and embodiments of the invention shall be explained with reference to the attached drawings.
- Figures 1 and 2: schematically show the burner head in the side mode operation,
- Figures 3 and 4: schematically show the burner head in the straight mode operation,

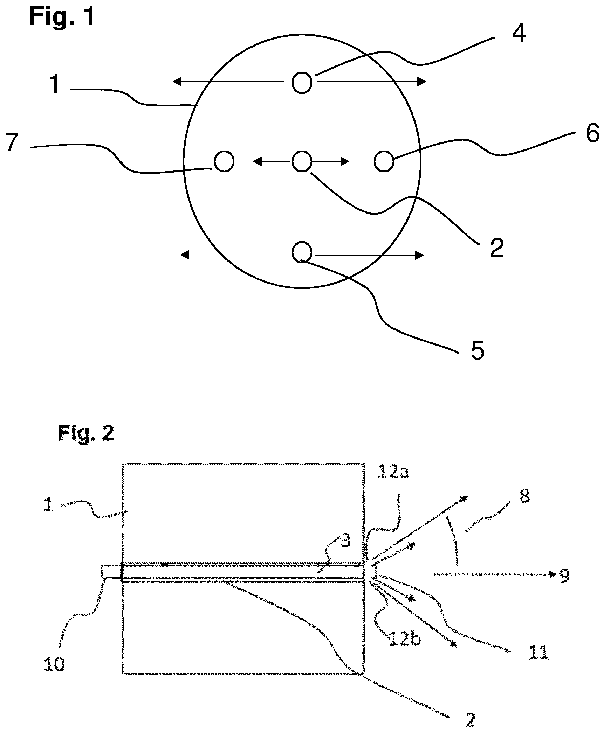

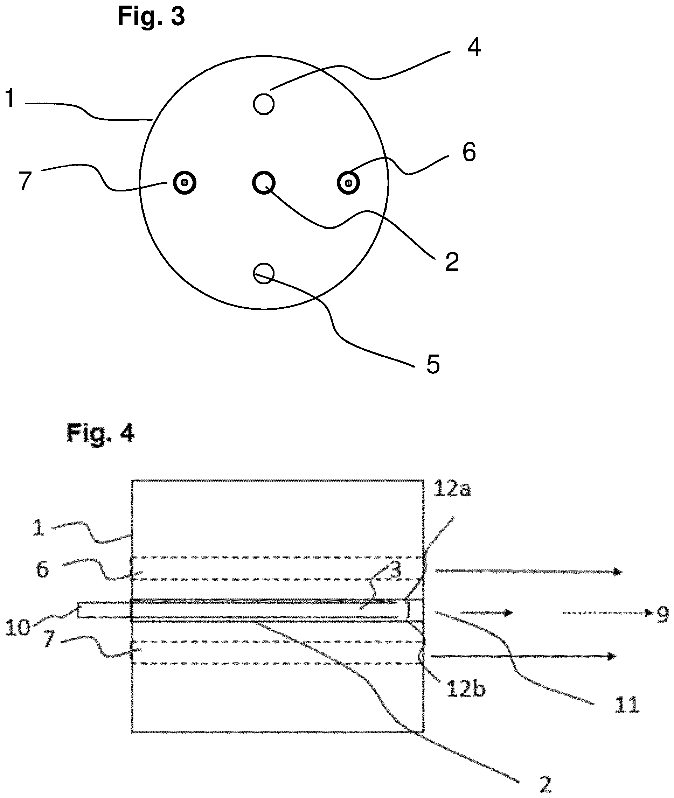

Figures 1 to 4 show an inventive burner which is located in the roof of a furnace. Figures 1 and 2 show the burner in the side mode operation, figures 3 and 4 show the burner in the straight mode operation.

Figure 1 shows the front view of the burner. The burner head 1 has one central bore 2 in which a fuel lance 3 has been inserted (see figure 2). The fuel lance 3 is a cylindrical tube which can be moved within the central bore 2 in its axial direction. The fuel lance 3 has an upstream end 10 and a downstream end 11. The upstream end 10 of the fuel lance 3 is connected to a gaseous fuel source, for example to a natural gas source. The downstream end 11 of the fuel lance 3 is closed so that fuel flowing through the fuel lance 3 cannot leave the fuel lance 3 in the main firing direction 9. The main firing direction 9 is defined by the longitudinal or axial extension of the fuel lance 3 from its upstream end to its downstream end. In figure 1 the main firing direction 9 is perpendicular to the drawing layer.

Two radial openings 12a, 12b are provided in the mantle of the tubular fuel lance 3 near its downstream end 11. The two radial openings 12a, 12b are located opposite to each other, preferably the two radial openings 12a, 12b and the center of the fuel lance 3 are in one straight line. The radial openings 12a, 12b are designed such that the fuel flows out of the radial openings 12a, 12b at an angle of more than 30° to the main firing direction 9, preferably at an angle between 30° and 70° to the main firing direction 9.

In the side mode operation as shown in figures 1 and 2 the fuel lance 3 is located relative to the central bore 2 in a manner that the radial openings 12a, 12b are not covered by the burner head 1. The downstream end 11 of the fuel lance 3 stands out of the burner head 1 and the central bore 2. The fuel flowing out through the radial openings 12a, 12b does not impinge on the burner head 1.

Two first oxidant outlets 4, 5 are provided in the 12 o'clock and 6 o'clock position, respectively. Two second oxidant outlets 6, 7 are provided in the 3 o'clock and 9 o'clock position, respectively. The first and second oxidant outlets 4, 5, 6, 7 are connected to an oxidant supply. Preferably, the oxidant has an oxygen content of at least 80 % by volume, more preferably pure oxygen is used as oxidant.

The first oxidant outlets 4, 5 are designed so that the oxidant flows out at an angle 8 of 20° to 80° or 20° to 50° relative to the main firing direction 9. The second oxidant outlets 6, 7 open directly in the main firing direction 9. The oxidant flows out of the second oxidant outlets 6, 7 essentially in the main firing direction 9.

The first oxidant outlets 4, 5 are used in the side mode operation of the burner, the second oxidant outlets 6, 7 are used in the straight mode operation of the burner. The operation modes will now be explained in more detail.

As an example, the burner is located in the roof of a steel heating furnace. The furnace is loaded with steel material which shall be heated up fast without causing over-heating of the steel material. The distance between the burner head and the steel material is for example 1 to 1.5 m.

In the beginning the steel material is still cold. The burner is operated in straight mode to maximize the heat transfer to the steel material. In the straight mode the fuel lance 3 is withdrawn into the central bore 2 such that the fuel cannot flow out linearly and straightforward but will impinge on the inner surface of the bore 2. The burner head 1 acts as a deflector for the fuel flow. The flow direction of the fuel is changed by the burner head / deflector 1 and the fuel is essentially deflected into the main firing direction 9.

The oxidant supply is connected to or switched to the second oxidant outlets 6, 7. The oxidant flows out of the second oxidant outlets 6, 7 in the main firing direction. Thereby, the fuel and the oxidant come into close interaction and combust in a straight, hot flame. The flame or a main part of the flame goes straight forward out of the burner and hits a well-defined area in front of the burner. Depending on the burner power and on the distance between burner and steel material, the flame could even hit the steel material placed in front of the burner. In the beginning the heating process benefits from the direct heating and / or from the direct flame impingement. However, when the material has reached a certain temperature the straight flame could overheat the surface area of the material which is located in front of the flame.

From that time until the end of the heating cycle the flame must not get in contact with the surface of the material and the burner is switched to side mode operation. For side mode operation the fuel lance 3 is moved in the main firing direction 9 until the downstream end 11 of the fuel lance 3 and the radial openings 12a, 12b stand out of the central bore 2 and out of the burner head 1.

The oxidant supply is switched to the first oxidant outlets 4, 5. Oxidant supply to the second oxidant outlets 6, 7 is stopped. As described above, the fuel and the oxidant then flow to the sides of the burner head 1. The interaction of fuel and oxidant is less intensive compared to the straight mode. In one embodiment fuel and oxidant are injected in such a manner that the burner operates in flameless mode. Thereby, hot spots are avoided and the temperature uniformity in the furnace is enhanced.

The invention offers the possibility to modulate the burner operation between the side mode and the straight mode.

While the invention has been described with reference to a steel heating furnace with a roof mounted burner, other furnace types, continuous furnaces or batch type furnaces, can also benefit from the inventive idea. The invention is further not limited to steel heating furnaces but any kind of material, in particular metal material, such as steel or aluminium, can be heated.

### Reference numbers:

- 1: burner head / deflector
- 2: central bore
- 3: fuel lance
- 4, 5: first oxidant outlets
- 6, 7: second oxidant outlets
- 8: angle of first oxidant flow
- 9: main firing direction
- 10: upstream end
- 11: downstream end
- 12a, 12b: radial openings

## Claims

1. Burner with a burner head (1) comprising at least one fuel lance (3) and at least one oxidant outlet (4, 5, 6, 7) and with at least one fuel supply line for a fuel gas and at least one oxidant supply line for a gaseous oxidant wherein the fuel supply line is connected to the upstream end of the fuel lance (3), and wherein the longitudinal extension of the fuel lance (3) defines the main firing direction (9) of the burner,
**characterized in**
**that** the fuel lance (3) is closed at its downstream end such that no fuel can leave the fuel lance (3) in the main firing direction (9),
**that** the fuel lance (3) comprises at least one radial opening (12a, 12b),
**that** a deflector (1) is provided,
and **that** the radial opening (12a, 12b) and the deflector (1) are movably arranged relative to each other.

2. Burner according to claim 1, **characterized in that** there is at least one first oxidant outlet (4, 5) and at least one second oxidant outlet (6, 7).

3. Burner according to claim 2, **characterized in that** the first oxidant outlet (4, 5) is designed so that the oxidant leaves the first oxidant outlet (4, 5) at an angle of more than 10°, more than 20° or more than 30° relative to the main firing direction (9).

4. Burner according to any of the preceding claims, **characterized in that** the second oxidant outlet (6, 7) is designed so that the oxidant leaves the second oxidant outlet (6, 7) at an angle of less than 20° or less than 10° relative to the main firing direction (9).

5. Burner according to any of the preceding claims, **characterized in that** there are two or more first oxidant outlets (4, 5) and / or that there are two or more second oxidant outlets (6, 7).

6. Burner according to claim 5, **characterized in that** the first oxidant outlets (4, 5) and the downstream end of the fuel lance (3) are arranged in an essentially straight first line and that the second oxidant outlets (6, 7) and the downstream end of the fuel lance (3) are arranged in an essentially straight second line and that the first line and the second line are perpendicular to each other.

7. Burner according to any of the preceding claims, **characterized in that** the oxidant supply line is connected to an oxidant source which provides an oxidant with an oxygen content of at least 80 % by volume.

8. Burner according to any of the preceding claims, **characterized in that** the deflector (1) is designed as a sleeve or as a tube.

9. Burner according to any of the preceding claims, **characterized in that** the fuel lance (3) is provided in a bore within the burner head (1) and that the burner head (1) acts as the deflector..
